# EUROPÄISCHE PATENTSCHRIFT

(11) **EP 1 838 460 B1**
(45) Veröffentlichungstag und Bekanntmachung des Hinweises auf die Patenterteilung: **28.04.2010**
(21) Anmeldenummer: 05822308.2
(22) Anmeldetag: 22.12.2005
(51) Int. Cl.: B05D 7/08

(54) **VERFAHREN ZUR VERSIEGELUNG VON OBERFLÄCHEN**
METHOD FOR SEALING SURFACES
PROCEDE DE COLMATAGE DE SURFACES

(30) Priorität: 22.12.2004 DE 102004061771
(43) Veröffentlichungstag der Anmeldung: 03.10.2007
(73) Patentinhaber: Klebchemie M.G. Becker GmbH & Co. KG, 76356 Weingarten/Baden (DE)
(72) Erfinder: FANDREY, Jens, Klebchemie M.G. Becker GmbH & Co.KG, 76356 Weingarten/Baden (DE); EHRMANN, Elke, 76227 Karlsruhe (DE); BECKER-WEIMANN, Klaus, 76227 Karlsruhe (DE)
(74) Vertreter: Isenbruck, Günter
(86) Internationale Anmeldenummer: PCT/EP2005/013951
(87) Internationale Veröffentlichungsnummer: WO 2006/066954

(56) Entgegenhaltungen:
- EP-A- 1 386 936
- WO-A-02/12407
- WO-A-02/094549
- WO-A-2004/000516
- WO-A-2005/018833
- WO-A-2006/002917
- DE-A1- 19 806 136

## Beschreibung

Die vorliegende Erfindung betrifft einen Gegenstand, dessen Oberfläche zumindest teilweise versiegelt ist sowie Verfahren zu dessen Versiegelung.

In den verschiedensten Anwendungsgebieten kommen zur Zeit Lacke als Versiegelungsschicht auf der Oberfläche von Gegenständen in großen Mengen zum Einsatz, so etwa in der Möbel- und holzverarbeitenden Industrie, aber auch bei Gegenständen aus Stahl, Nichteisenmetallen, Kunststoff, Papier, Pappe, Pappmache oder mineralischen Stoffen.

Ein weit verbreitetes Lacksystem sind dabei UV-härtende Lacke, die meist per Walzenauftrag, seltener im Sprühauftrag auf die Teile aufgetragen werden. Der anschließende Aushärtevorgang erfolgt mit UV-Licht bzw. UV-Lampen. Der maschinelle Aufwand bei der Lackierung mit UV-Lacken ist sehr hoch und erfordert einen sehr großen Raumbedarf. Der große Raumbedarf liegt auch darin begründet, daß Lackiervorgänge mit UV-härtenden Systemen meist mehrere Aufträge-in der Praxis sind drei bis vier Aufträge gängig-erfordern. Mit jedem Lackauftrag können aufgrund der Viskosität, speziell aber aufgrund der UV-Durchhärtung nur ca. 10 bis 20 µm dicke Schichten pro Arbeitsgang appliziert werden, weshalb in der Regel mehrere Lackaufträge erforderlich sind.

Auch andere Lacksysteme, wie z. B. 2-K-PUR-Lacke, Nitrolacke oder Wasserlacke müssen ebenfalls in mehreren Schichten aufgetragen werden. Füller, Grundierungen und gegebenenfalls Zwischenschliffe sind auch hier meist notwendig.

Vorteilig an Lacken ist jedoch, dass diese relativ schnell trocknen und danach eine hohe Feuchtigkeits- und Reinigungsmittelresistenz aufweisen können.

Aufgrund des erforderlichen mehrschichtigen Aufbringens der Lackschichten wurde nach Verfahren zur Versiegelung gesucht, die die Versiegelungsschicht möglichst in einem Arbeitsgang auf einen Gegenstand aufzubringen vermag.

Aus der DE 198 06 136 C2 ist es bekannt, bei einer Diele für Parkettböden mit wenigstens einer Holzschicht und einer Versiegelungsschicht auf ihrer Oberfläche vorzusehen, dass die Versiegelungsschicht als eine wasser- und lösungsmittelfreie, mit der Luftfeuchtigkeit aushärtende Reaktiv-Schmelzmasse-Schicht auf Polyurethanbasis ausgebildet ist. Die Reaktiv-Schmelzmasse-Schicht wird dabei auf die Holzschicht aufgerakelt, aufgewalkt oder aufgesprüht.

Auch die WO-A 02/094549 und die WO-A 02/094457 schlagen zur Versiegelung eines Furniers bzw. eines Möbelteils eine Reaktiv-Schmelzmasse-Schicht auf Polyurethanbasis vor. Hierbei wird die Schmelzmasse-Schicht beispielsweise mit einer Walze geglättet, um eine homogene Oberfläche zu erzielen. Damit bei der Glättung die Schmelzmasse nicht an der Walze verklebt, wird die Walzenoberfläche mit einem Trennmittel auf Parafinwachs-Basis versehen.

WO-A 2004/000516 betrifft die Verbesserung der Witterungsbeständigkeit eines Holzbauteils mit Hilfe eines feuchtigkeitsaushärtenden Polyurethans, ohne dass Bezug auf Schmelzmassen genommen wird.

Die Schmelzmasse-Schicht hat den Vorteil, dass die gewünschten Schichtdicken in einem Arbeitsgang aufgetragen werden können. Außerdem bietet die ausgehärtete Schmelzmasse noch ausreichende Flexibilität, um die Bildung von Sprödrissen zu vermeiden.

Nachteilig an der Verwendung der Reaktiv-Schmelzmassen ist jedoch die lange Verweilzeit, bis dass die Quervernetzung und damit die vollständige Aushärtung abgeschlossen sind. Diese dauert in der Regel einige Tage, in denen eine Weiterverarbeitung oder Verpackung der versiegelten Gegenstände nur beding möglich ist.

Der vorliegenden Erfindung liegt daher die Aufgabe zugrunde, ein verbessertes Verfahren zur Versiegelung bereitzustellen, bei dem die die oben geschilderten Nachteile zumindest teilweise vermieden werden.

Die Aufgabe wird gelöst durch ein Verfahren zur Versiegelung zumindest eines Teils der Oberfläche eines Gegenstandes die Schritte enthaltend
(a) Aufbringen einer Reaktiv-Schmelzmasse-Schicht auf Polyurethanbasis auf zumindest einen Teil der Gegenstandsoberfläche;
(b) Gegebenenfalls Glätten der Reaktiv-Schmelzmasse-Schicht;
(c) Aufbringen einer Lackschicht auf der Reaktiv-Schmelzmasse-Schicht, wobei die Lackschicht vor dem vollständigen Aushärten der Schmelzmasse aufgebracht wird.

Es wurde nämlich gefunden, dass überraschenderweise die positiven Eigenschaften, die die Verwendung von Lack- oder Reaktiv-Schmelzmasse-Schichten zur Versiegelung mit sich bringen, bestehen bleiben können, wenn eine kombinierte Reaktiv-Schmelzmasse/Lack-Versiegelungsschicht verwendet wird. Hierbei ist insbesondere überraschend, dass die Reaktiv-Schmelzmasse aushärten kann, obwohl diese durch die Lackschicht von der umgebenden Luft, deren Feuchtigkeit üblicherweise für die Quervernetzung und damit für die Aushärtung erforderlich ist, abgedeckt ist.

Ein weiterer Aspekt der vorliegenden Erfindung ist ein Gegenstand mit einer Versiegelungsschicht auf zumindest einem Teil seiner Oberfläche enthaltend eine Reaktiv-Schmelzmasse-Schicht auf Polyurethanbasis auf zumindest einem Teil der Gegenstandsoberfläche und eine Lackschicht auf der Reaktiv-Schmelzmasse-Schicht.

Bei der Reaktiv-Schmelzmasse auf Polyurethanbasis handelt es sich vorzugsweise um eine handelsübliche Reaktiv-Schmelzmasse auf Polyurethanbasis, die normalerweise mit Hilfe der in der umgebenden Raumluft vorhandenen Feuchtigkeit reagiert und dabei aushärtet. Vorzugsweise ist diese Reaktiv-Schmelzmasse wasser- und Lösungsmittelfrei.

Die vorzugsweise wasser- und lösungsmittelfreie Reaktiv-Schmelzmasse-Schicht wird üblicherweise auf die zu versiegelnde Fläche bei einer Temperatur von mindestens 100 °C, etwa 100 °C bis 150 °C, vorzugsweise 120°C bis 150°C, aufgebracht. Dabei können normalerweise pro Quadratmeter zu beschichtender Oberfläche etwa 20 bis 150 g Reaktiv-Schmelzmasse aufgetragen werden. Die Reaktiv-Schmelzmasse besitzt üblicherweise eine Dichte von ca. 1,1 g/m² und eine Viskosität nach BROOKFIELD bei 120 °C im Bereich von ca. 2000 mPas bis 30.000 mPas, vorzugsweise 4.000 mPas bis 10.000 mPas. Günstig ist es, die Reaktiv-Schmelzmasse-Schicht unter Luftabschluß und Abschirmung von Luftfeuchtigkeit aufzubringen, um ein vorzeitiges Ausreagieren zu verhindern. Die Schicht kann beispielsweise aufgerakelt, ausgewalzt, aufgesprüht oder mittels einer Düse oder Schlitzdüse aufgebracht werden. Selbst im ausgehärteten Zustand weist die Reaktiv-Schmelzmasse-Schicht noch eine gewisse Restelastizität auf.

Vorzugsweise weist die Reaktiv-Schmelzmasse-Schicht eine Dicke im Bereich von 20 µm bis 150 µm auf, mehr bevorzugt von 80 µm bis 100 µm.

Aufgrund der Materialeigenschaften der Reaktiv-Schmelzmasse kann eine solche Dicke durch einmaliges Aufbringen erzeugt werden. Die Schicht ist somit einlagig hergestellt. Da auch dies unter anderem eine vorteilhafte Zeitersparnis darstellt, ist das einlagige Auftragen im Rahmen der vorliegenden Erfindung bevorzugt.

Da überraschenderweise ein vollständiges Aushärten der Reaktiv-Schmelzmasse-Schicht nicht erforderlich ist, bevor die Lackschicht auf diese aufgebracht wird, kann die Lackschicht vor dem vollständigen Aushärten der Schmelzmasse aufgebracht werden. Dies kann eine enorme Zeitersparnis darstellen.

Der verwendete Lack kann ein beliebiger Lack sein, der vorteilhafterweise schnell härtet, um eine möglichst frühe Weiterverarbeitung oder Verpackung der Gegenstände nach der Versiegelung zu ermöglichen.

Beispielhaft seien 2-K-PUR-Lacke, Nitrolacke oder Wasserlacke genannt.

Vorzugsweise kommen jedoch UV-härtende Lacke zum Einsatz. Dieses weitverbreitete Lacksystem kann per Walzenauftrag oder im Sprühauftrag auf die Gegenstände aufgetragen werden. Der anschließende Aushärtevorgang erfolgt mit UV-Licht bzw. UV-Lampen. Mit jedem Lackauftrag können aufgrund der Viskosität und der UV-Durchhärtung nur ca. 10 bis 20 µm dicke Schichten appliziert werden, weshalb üblicherweise mehrere Lackaufträge notwendig sind.

Zwar ist es auch im Rahmen der vorliegenden Erfindung möglich, die Lackschicht mehrlagig aufzubringen. Bevorzugt wird jedoch diese einlagig aufgebracht. Dies ist normalerweise ausreichend, da bereits eine die Reaktiv-Schmelzmasse als Teil der Versiegelungsschicht aufgebracht ist.

Daher weist die Lackschicht vorzugsweise nur eine Dicke im Bereich von 5 µm bis 25 µm auf, mehr bevorzugt von 5 µm bis 10 µm.

Eine Verbesserung der Oberflächeneigenschaften der Reaktiv-Schmelzmasse-Schicht kann dadurch erzielt werden, dass nach dem Aufbringen auf die (teilweise) Oberfläche des gegenstands die Reaktiv-Schmelzmasse-Schicht geglättet wird. Dies ist nicht immer zwingend erforderlich, jedoch wird es im Rahmen der vorliegenden Erfindung bevorzugt. Dadurch werden Unebenheiten der Oberfläche vermieden, die sich durch den bloßen Auftrag der heißen Reaktiv-Schmelzmasse ergeben könnten und es ergibt sich eine noch glättere Oberfläche.

Vorteilhaft ist es, der Oberfläche der Reaktiv-Schmelzmasse-Schicht zwischen dem Aufbringen und dem Glätten (falls dies durchgeführt wird) noch einmal Wärme zuzuführen, um das Ergebnis der Glättung weiter zu verbessern. Günstigerweise erfolgt das Glätten mittels einer Glättwalze, beispielsweise einer Stahlwalze, oder eines Glättbandes, die gegebenenfalls mit einer Polyurethan-Beschichtung versehen sein können.

Besonders vorteilhaft ist es, wenn das Mittel zum Glätten während des Glättens mit einem Trennmittel benetzt wird. Auf diese Weise wird es wirksam verhindert, dass die noch nicht ausgehärtete Reaktiv-Schmelzmasse-Schicht auf dem zu versiegelnden Gegenstand abreißt und an der Walze anklebt.

Als Trennmittel kann ein lösemittelfreies und niedrigviskoses Mittel auf Paraffinwachs-Basis verwendet werden. Durch den Einsatz eines solchen Mittels kann die Oberfläche der Reaktiv-Schmelzmasse-Schicht noch glatter werden.

Das Trennmittel auf Paraffinwachs-Basis kann klar sein und beispielsweise eine Dichte von ca. 0,85 g/cm³ sowie eine Viskosität bei 20 °C nach BROOKFIELD von ca. 34 mPas aufweisen. Ein Viskositätsbereich zwischen 30 und 500 mPas ist auch denkbar. Die Auftragsmenge kann beispielsweise ca. 20 bis 35 g/m² betragen.

Das Trennmittel wird beispielsweise im Sprühverfahren oder Vakuum-Sprühverfahren auf das Mittel zum Glätten aufgebracht. Das Trennmittel kann auch mittels eines getränkten Filzes aufgebracht werden, was eine besonders einfache und sichere Möglichkeit zur Schaffung eines gleichmäßigen, dünnen Trennmittelfilms während des Glättens der Reaktiv-Schmelzmasse-Schicht darstellt.

Vorzugsweise wird als Trennmittel der auf den Gegenstand aufzubringende Lack verwendet. Dadurch kann das Glätten der Reaktiv-Schmelzmasse-Schicht und das Aufbringen der Lackschicht in einem Arbeitsgang erfolgen, was unter anderem den weiteren Vorteil einer schnellen und kostengünstigen Versiegelung zeigt.

Mit den erfindungsgemäßen Verfahren können die unterschiedlichsten Gegenstandsoberflächen oder zumindest Teile davon versiegelt werden, wobei diese Gegenstände ebenfalls ein Aspekt der vorliegenden Erfindung sind.

Neben Elementoberflächen für Dielen- oder Parkettböden können damit auch beispielsweise die Oberflächen von Möbeln oder Möbelteilen zumindest teilweise versiegelt werden. Es bleibt jedoch zu betonen, dass prinzipiell die Oberfläche eines beliebigen Gegenstandes nach dem erfindungsgemäßen Verfahren versiegt werden kann bzw. jeder Gegenstand eine erfindungsgemäße Versiegelungsschicht aufweisen kann.

Vorzugsweise handelt es sich bei den Gegenständen um Elemente für Dielen- und Parkettböden, an die besonders hohe Anforderungen in Bezug auf eine Versiegelung gestellt werden.

Die zu versiegelnde Gegenstandsoberfläche kann aus Holz oder einem holzartigen Stoff, Eisen, Nichteisenmetall, Kunststoff, Papier, Pappe, Pappmaché oder einem mineralischen Stoff zumindest teilweise bestehen.

## Patentansprüche

1. Verfahren zur Versiegelung zumindest eines Teils der Oberfläche eines Gegenstandes die Schritte enthaltend
(a) Aufbringen einer Reaktiv-Schmelzmasse-Schicht auf Polyurethanbasis auf zumindest einen Teil der Gegenstandsoberfläche;
(b) Gegebenenfalls Glätten der Reaktiv-Schmelzmasse-Schicht;
(c) Aufbringen einer Lackschicht auf der Reaktiv-Schmelzmasse-Schicht, wobei die Lackschicht vor dem vollständigen Aushärten der Schmelzmasse aufgebracht wird.

2. Verfahren nach Anspruch 1, **dadurch gekennzeichnet, dass** der Lack UV-härtend ist.

3. Verfahren nach Anspruche 1 oder 2, **dadurch gekennzeichnet, dass** das Glätten der Schmelzmasse-Schicht und das Aufbringen der Lackschicht in einem Arbeitsgang erfolgen.

4. Verfahren nach Anspruch 3, **dadurch gekennzeichnet, dass** der Lack als Trennmittel dient.

5. Verfahren nach einem der Ansprüche 1 bis 5, **dadurch gekennzeichnet, dass** die Schmelzmasse-Schicht und die Lackschicht jeweils einlagig aufgetragen werden.

6. Verfahren nach einem der Ansprüche 1 bis 5, **dadurch gekennzeichnet, dass** die Reaktiv-Schmelzmasse-Schicht eine Dicke im Bereich von 20 µm bis 150 µm aufweist.

7. Verfahren nach einem der Ansprüche 1 bis 6, **dadurch gekennzeichnet, dass** die Lackschicht eine Dicke im Bereich von 5 µm bis 25 µm aufweist.

8. Verfahren nach einem der Ansprüche 1 bis 7, **dadurch gekennzeichnet, dass** die zu versiegelnde Gegenstandsoberfläche aus Holz oder einem holzartigen Stoff, Eisen, Nichteisenmetall, Kunststoff, Papier, Pappe, Pappmaché oder einem mineralischen Stoff zumindest teilweise besteht.

9. Verfahren nach einem der Ansprüche 1 bis 8, **dadurch gekennzeichnet, dass** der Gegenstand ein Parkett- oder Dielenboden Element, ein Möbel oder Möbelteil ist.

10. Gegenstand mit einer Versiegelungsschicht auf zumindest einem Teil seiner Oberfläche enthaltend eine Reaktiv-Schmelzmasse-Schicht auf Polyurethanbasis auf zumindest einem Teil der Gegenstandsoberfläche und eine Lackschicht auf der Reaktiv-Schmelzmasse-Schicht.

11. Gegenstand nach Anspruch 10, **dadurch gekennzeichnet, dass** der Lack UV-härtend ist.

12. Gegenstand nach Anspruch 10 oder 11, **dadurch gekennzeichnet, dass** die Schmelzmasse-Schicht und die Lackschicht jeweils einlagig ausgebildet sind.

13. Gegenstand nach einem der Ansprüche 10 bis 12, **dadurch gekennzeichnet, dass** die Reaktiv-Schmelzmasse-Schicht eine Dicke im Bereich von 20 µm bis 150 µm aufweist.

14. Gegenstand nach einem der Ansprüche 10 bis 13, **dadurch gekennzeichnet, dass** die Lackschicht eine Dicke von im Bereich 5 µm bis 25 µm aufweist

15. Gegenstand nach einem der Ansprüche 10 bis 14, **dadurch gekennzeichnet, dass** die zu versiegelnde Gegenstandsoberfläche aus Holz oder einem holzartigen Stoff, Eisen, Nichteisenmetall, Kunststoff, Papier, Pappe, Pappmaché oder einem mineralischen Stoff zumindest teilweise besteht.

16. Gegenstand nach einem der Ansprüche 10 bis 15, **dadurch gekennzeichnet, dass** dieser ein Parkett- oder Dielenboden Element, ein Möbel oder Möbelteil ist.

## Claims

1. Method of sealing at least part of the surface of an article, comprising the steps of
(a) applying a reactive melt layer based on polyurethane to at least one part of the surface of the article;
(b) if desired, smoothing the reactive melt layer;
(c) applying a coating layer to the reactive melt layer, the coating layer being applied before the full curing of the melt.

2. Method according to Claim 1, **characterized in that** the coating material is UV-curing.

3. Method according to Claim 1 to 2, **characterized in that** the smoothing of the melt layer and the application of the coating layer take place in one operation.

4. Method according to Claim 3, **characterized in that** the coating material serves as release agent.

5. Method according to one of Claims 1 to 4,
**characterized in that** the melt layer and the coating layer are each applied in a single ply.

6. Method according to one of Claims 1 to 5,
**characterized in that** the reactive melt layer has a thickness in the range from 20 µm to 150 µm.

7. Method according to one of Claims 1 to 6,
**characterized in that** the coating layer has a thickness in the range from 5 µm to 25 µm.

8. Method according to one of Claims 1 to 7,
**characterized in that** the surface of the article to be sealed is composed at least partly of wood or a wood-like material, iron, non-ferrous metal, plastic, paper, cardboard, papier-mâché or a mineral substance.

9. Method according to one of Claims 1 to 8,
**characterized in that** the article is a wood-block flooring element, a piece of furniture or furniture component.

10. Article having a sealing layer on at least part of its surface, comprising a reactive melt layer based on polyurethane on at least part of the surface of the article, and a coating layer on the reactive melt layer.

11. Article according to Claim 10, **characterized in that** the coating material is UV-curing.

12. Article according to Claim 10 or 11, **characterized in that** the melt layer and the coating layer are each formed in a single ply.

13. Article according to one of Claims 10 to 12,
**characterized in that** the reactive melt layer has a thickness in the range from 20 µm to 150 µm.

14. Article according to one of Claims 10 to 13,
**characterized in that** the coating layer has a thickness in the range from 5 µm to 25 µm.

15. Article according to one of Claims 10 to 14, **characterized in that** the surface of the article to be sealed is composed at least partly of wood or a wood-like material, iron, non-ferrous metal, plastic, paper, cardboard, papier-mâché or a mineral substance.

16. Article according to one of Claims 10 to 15, **characterized in that** this article is a wood-block flooring element, a piece of furniture or a furniture component.

## Revendications

1. Procédé de vitrification d'au moins une partie de la surface d'un objet, contenant les étapes
(a) application d'une couche de masse fondue réactive à base de polyuréthanne sur au moins une partie de la surface de l'objet ;
(b) éventuellement lissage de la couche de masse fondue réactive ;
(c) application d'une couche de laque sur la couche de masse fondue réactive, la couche de laque étant appliquée avant le durcissement complet de la masse fondue.

2. Procédé selon la revendication 1, **caractérisé en ce que** la laque est durcissable par UV.

3. Procédé selon la revendication 1 ou 2, **caractérisé en ce que** le lissage de la couche de masse fondue et l'application de la couche de laque ont lieu en une opération.

4. Procédé selon la revendication 3, **caractérisé en ce que** la laque sert d'agent de séparation.

5. Procédé selon l'une quelconque des revendications 1 à 4, **caractérisé en ce que** la couche de masse fondue et la couche de laque sont à chaque fois appliquées en une couche.

6. Procédé selon l'une quelconque des revendications 1 à 5, **caractérisé en ce que** la couche de masse fondue réactive présente une épaisseur dans la plage allant de 20 µm à 150 µm.

7. Procédé selon l'une quelconque des revendications 1 à 6, **caractérisé en ce que** la couche de laque présente une épaisseur dans la plage allant de 5 µm à 25 µm.

8. Procédé selon l'une quelconque des revendications 1 à 7, **caractérisé en ce que** la surface de l'objet à vitrifier est constituée au moins en partie de bois ou d'une substance de type bois, de fer, d'un métal autre que le fer, de plastique, de papier, de carton, de papier mâché ou d'une substance minérale.

9. Procédé selon l'une quelconque des revendications 1 à 8, **caractérisé en ce que** l'objet est un élément de parquet ou de parquet en bois dur, un meuble ou une partie de meuble.

10. Objet muni d'une couche vitrifiée sur au moins une partie de sa surface, contenant une couche de masse fondue réactive à base de polyuréthanne sur au moins une partie de la surface de l'objet et une couche de laque sur la couche de masse fondue réactive.

11. Objet selon la revendication 10, **caractérisé en ce que** la laque est durcissable par UV.

12. Objet selon la revendication 10 ou 11, **caractérisé en ce que** la couche de masse fondue et la couche de laque sont à chaque fois appliquées en une couche.

13. Objet selon l'une quelconque des revendications 10 à 12, **caractérisé en ce que** la couche de masse fondue réactive présente une épaisseur dans la plage allant de 20 µm à 150 µm.

14. Objet selon l'une quelconque des revendications 10 à 13, **caractérisé en ce que** la couche de laque présente une épaisseur dans la plage allant de 5 µm à 25 µm.

15. Objet selon l'une quelconque des revendications 10 à 14, **caractérisé en ce que** la surface de l'objet à vitrifier est constituée au moins en partie de bois ou d'une substance de type bois, de fer, d'un métal autre que le fer, de plastique, de papier, de carton, de papier mâché ou d'une substance minérale.

16. Objet selon l'une quelconque des revendications 10 à 15, **caractérisé en ce que** celui-ci est un élément de parquet ou de parquet en bois dur, un meuble ou une partie de meuble.
